# EUROPEAN PATENT SPECIFICATION

(11) **EP 4 273 742 B1**
(45) Date of publication and mention of the grant of the patent: **23.09.2026**
(21) Application number: 21912968.1
(22) Date of filing: 29.06.2021
(51) Int. Cl.: G06V 30/32, G06V 30/226

(54) **HANDWRITING RECOGNITION METHOD AND APPARATUS, ELECTRONIC DEVICE, AND MEDIUM**
HANDSCHRIFTERKENNUNGSVERFAHREN UND -VORRICHTUNG, ELEKTRONISCHE VORRICHTUNG UND MEDIUM
PROCÉDÉ ET APPAREIL DE RECONNAISSANCE D'ÉCRITURE MANUSCRITE, DISPOSITIF ÉLECTRONIQUE ET SUPPORT

(30) Priority: 31.12.2020 CN 202011640989
(43) Date of publication of application: 08.11.2023
(73) Proprietor: Beijing Sogou Technology Development Co., Ltd., Haidian District, Beijing 100084 (CN)
(72) Inventor: XIN, Xiaozhe, Beijing 100084 (CN); QIN, Bo, Beijing 100084 (CN); ZHAO, Zhiyong, Beijing 100084 (CN); WANG, Yingjun, Beijing 100084 (CN); WANG, Jie, Beijing 100084 (CN); SU, Xuefeng, Beijing 100084 (CN); CHEN, Wei, Beijing 100084 (CN)
(74) Representative: Novagraaf International SA
(86) International application number: PCT/CN2021/103279
(87) International publication number: WO 2022/142212

(56) References cited:
- WO-A1-2019/053898
- CN-A- 104 573 727
- CN-A- 104 850 837
- CN-A- 108 921 007
- CN-A- 110 674 822
- CN-A- 112 766 080
- US-A1- 2013 251 249
- YOSHUA BENGIO ET AL: "Curriculum learning", PROCEEDINGS OF THE 26TH ANNUAL INTERNATIONAL CONFERENCE ON MACHINE LEARNING, ICML '09, 1 January 2009 (2009-01-01), New York, New York, USA, pages 1 - 8, XP055239022, ISBN: 978-1-60558-516-1, DOI: 10.1145/1553374.1553380
- HINTON GEOFFREY ET AL: "Distilling the knowledge in a neural network", ARXIV.ORG, 9 March 2015 (2015-03-09), Ithaca, pages 1 - 9, XP093131063, Retrieved from the Internet <URL:https://arxiv.org/pdf/1503.02531.pdf> [retrieved on 20240213], DOI: 10.48550/ARXIV.1503.02531

## Description

### RELATED APPLICATION

This application claims priority to Chinese Patent Application No. 202011640989.4, entitled "HANDWRITING RECOGNITION METHOD AND APPARATUS, ELECTRONIC DEVICE AND MEDIUM" filed with the Chinese Patent Office on December 31, 2020.

### FIELD OF THE TECHNOLOGY

The present disclosure relates to the field of Internet technologies, and specifically to a handwriting recognition method, a handwriting recognition apparatus, an electronic device, and a medium.

### BACKGROUND OF THE DISCLOSURE

As Internet technologies rapidly advance, various input modes, such as voice input, handwriting input, pinyin input, and the like, are provided to facilitate user input. In the case of handwriting input, data inputted by handwriting is recognized by a handwriting recognition model, which improves the recognition efficiency, thereby enhancing the user experience. For example, US 2013/251249 A1 discloses handwriting recognition using trajectory data, dimensionality reduction, and model optimisation techniques.

However, a handwriting recognition framework used in the related art is generally based on a three-stage architecture of segmentation, combination and recognition. When using the handwriting recognition framework for recognition, especially for recognizing continuous stroke inputs, such as cursive handwriting, running handwriting, and the like, since there is no break in the continuous stroke handwriting, a segmentation module has a high probability of incorrect segmentation, resulting in low recognition accuracy.

### SUMMARY

The present disclosure provides a handwriting recognition method and a handwriting recognition apparatus, an electronic device, and a medium, which can solve the problem in the related art that the handwriting recognition accuracy is low due to incorrect segmentation, thereby effectively improving the handwriting recognition accuracy.

The invention is set out the in appended set of claims.

Based on the foregoing technical solutions, after obtaining the original handwriting trajectory data in real-time, the original handwriting trajectory data is compressed. The obtained compressed handwriting trajectory data is used as the input to the compressed end-to-end model, which performs recognition with the handwriting sequence features of the compressed handwriting trajectory data to obtain the text recognition result. By the segmentation, combination and recognition in the related art, when recognizing continuous stroke inputs, such as cursive handwriting, running handwriting, and the like, since there is no break in the continuous stroke handwriting, the segmentation module has a high probability of incorrect segmentation, resulting in low recognition accuracy. By contrast, the use of the compressed handwriting recognition model avoids the segmentation module making incorrect segmentation. The compressed handwriting trajectory data obtained by compressing the original handwriting trajectory data is used as the input, and the handwriting sequence features are used for recognition, which effectively avoids the problem in the related art that the recognition accuracy is low caused by incorrect segmentation, thereby effectively improving the recognition accuracy.

### BRIEF DESCRIPTION OF THE DRAWINGS

FIG. 1 is a flowchart of a handwriting recognition method according to one or more embodiments of the present disclosure.
FIG. 2 is a flowchart of a training method for a handwriting recognition model according to one or more embodiments of the present disclosure.
FIG. 3 is a schematic structural diagram of a handwriting recognition apparatus according to one or more embodiments of the present disclosure.
FIG. 4 is a structural diagram of a handwriting recognition device according to one or more embodiments of the present disclosure.
FIG. 5 is a structural diagram of a server according to one or more embodiments of the present disclosure.

### DESCRIPTION OF EMBODIMENTS

For better understanding of the foregoing technical solutions, the accompanying drawings and specific embodiments are used to explain the technical solutions of the present disclosure in detail. The present disclosure and the specific features in the embodiments are detailed description of the technical solutions, but not the limitation of them. The specific features in the embodiments may be combined with each other.

In view of the technical problem that responding with expression pictures results in low efficiency, the present disclosure provides a handwriting recognition method, including: obtaining original handwriting trajectory data in real-time; and inputting the original handwriting trajectory data into a preset handwriting recognition model, to obtain a text recognition result corresponding to the original handwriting trajectory data. The handwriting recognition model is obtained through training with multiple pieces of handwriting trajectory training data in a training data set.

After obtaining the original handwriting trajectory data in real-time, the original handwriting trajectory data is compressed. The obtained compressed handwriting trajectory data is used as the input, and handwriting sequence features of the compressed handwriting trajectory data are recognized by the compressed end-to-end model, to obtain the text recognition result. By contrast, in the related art of segmentation, combination and recognition, when recognizing continuous stroke inputs, such as cursive handwriting, running handwriting, and the like, since there is no break in the continuous stroke handwriting, the segmentation module has a high probability of incorrect segmentation, resulting in low recognition accuracy. The use of the compressed handwriting recognition model avoids the segmentation module making incorrect segmentation. The compressed handwriting trajectory data obtained by compressing the original handwriting trajectory data is used as the input, to use the handwriting sequence features for recognition, which effectively avoids the problem in the related art that the recognition accuracy is low due to incorrect segmentation, thereby effectively improving the recognition accuracy.

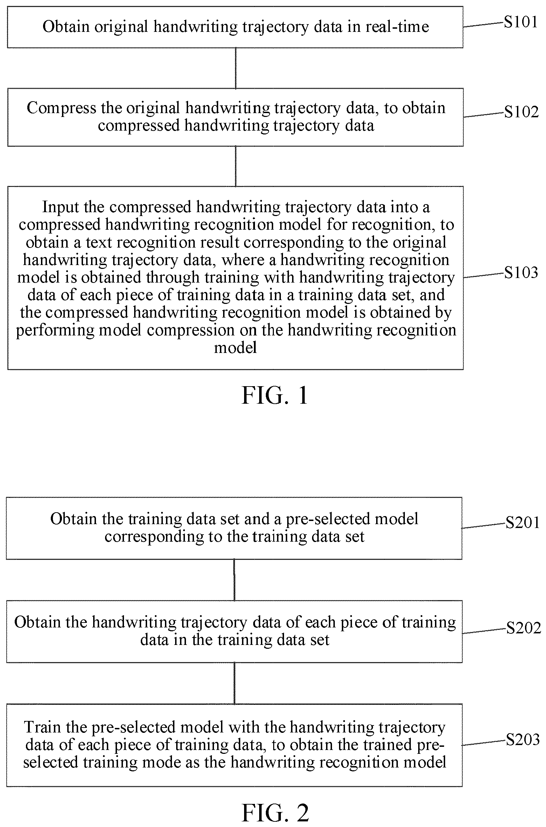

As shown in FIG. 1, the present disclosure provides a handwriting recognition method, including the following steps:
S101. Obtain original handwriting trajectory data in real-time;
S102. Compress the original handwriting trajectory data, to obtain compressed handwriting trajectory data; and
S103. Input the compressed handwriting trajectory data into a compressed handwriting recognition model for recognition, to obtain a text recognition result corresponding to the original handwriting trajectory data. A handwriting recognition model is obtained through training with multiple pieces of handwriting trajectory training data in a training data set, and the compressed handwriting recognition model is obtained by performing model compression on the handwriting recognition model.

According to some embodiments of the present disclosure, in step S101, the original handwriting trajectory data may be obtained in real-time from data inputted by handwriting by a user on a display screen of an electronic device. For example, after the user makes any stroke on the display screen, the original handwriting trajectory data of each stroke is obtained from the data of each stroke inputted by handwriting, which ensures that the original handwriting trajectory data is obtained in real time.

According to some embodiments of the present disclosure, the electronic device may be, for example, a smart phone, a tablet computer, a notebook computer, an e-book reader, or the like. The display screen may be, for example, a liquid crystal display (LCD) screen, a light-emitting diode (LED) screen, an electronic ink screen, or the like, which is not specifically limited herein.

According to some embodiments of the present disclosure, the data inputted by handwriting may include trajectory data of handwriting by a user with an electronic pen and trajectory data of handwriting by a user with a finger, which is not specifically limited herein.

In obtaining the original handwriting trajectory data in real-time, data preprocessing may be performed on the data inputted by handwriting and obtained in real-time, the data preprocessing including re-sampling; and the original handwriting trajectory data is obtained in real-time according to the preprocessed data inputted by handwriting. The data preprocessing may include trajectory rotation, or may include re-sampling and trajectory rotation, or may include re-sampling, trajectory rotation, and trajectory cleaning. After obtaining the original handwriting trajectory data, the original handwriting trajectory data is compressed, to obtain the compressed handwriting trajectory data.

According to some embodiments of the present disclosure, the data preprocessing generally includes re-sampling and trajectory rotation, so that when obtaining the original handwriting trajectory data in real-time according to the preprocessed data inputted by handwriting, the precision of the original handwriting trajectory data is enhanced.

According to some embodiments of the present disclosure, in order to solve the problem of different sampling rates of trajectory points due to different electronic devices used for writing or different handwriting speeds, re-sampling is performed on the data inputted by handwriting, so as to remove redundant points in the data inputted by handwriting. In this case, the re-sampling may be based on angle or distance, or based on both angle and distance. For example, the redundant points may be removed based on a condition that a cos value of an angle os less than 20 or 30 degrees, and/or, a condition that the distance is less than 4, 5, or 6 pixels. After the redundant points are removed, the data inputted by handwriting only retains handwriting skeleton information. Since the data inputted by handwriting only retains the handwriting skeleton information, with interference information being removed, the precision of the original handwriting trajectory data that is obtained in real-time is enhanced, thereby improving the accuracy of the subsequent recognition.

In addition, in order to solve the problem of low recognition accuracy of the original handwriting trajectory data due to irregular handwriting of users, trajectory rotation may be performed on the data inputted by handwriting. In this case, the data inputted by handwriting may be rotated by plus or minus 15 degrees, plus or minus 20 degrees, or the like, and the re-sampling is performed on the rotated trajectory data, to obtain the preprocessed data inputted by handwriting as the original handwriting trajectory data. In this way, the interference information is removed from the original handwriting trajectory data, and the problem of low recognition accuracy due to irregular handwriting of users can be avoided, thereby enhancing the precision of the original handwriting trajectory data. The irregular handwriting of users includes oblique handwriting, upward handwriting, and the like.

After obtaining the original handwriting trajectory data in real-time, step S102 is performed.

In step S102, after obtaining the original handwriting trajectory data in real-time, the original handwriting trajectory data is compressed, for example, by dimensionality reduction, to obtain the compressed handwriting trajectory data. A correlation between data of each dimension in the compressed handwriting trajectory data and a model recognition result of the handwriting recognition model is not lower than a preset threshold. In addition, features may be extracted from the original handwriting trajectory data, to obtain the compressed handwriting trajectory data.

According to some embodiments of the present disclosure, the dimensionality reduction technique such as principal component analysis (PCA) may be adopted to extract main features that can represent the original handwriting trajectory data, so as to ensure that the correlation between the retained data of each dimension and the model recognition result is not lower than the preset threshold. The compressed handwriting trajectory data is obtained according to the retained data of each dimension. The preset threshold may be configured according to an actual requirement. For example, K features having highest correlations with the model recognition result may be selected to be retained, and the preset threshold may be configured according to the feature having the lowest correlation among the K features, K being an integer not less than 2.

Since the correlation between the data of each dimension in the compressed handwriting trajectory data and the model recognition result is not lower than the preset threshold, the compressed handwriting trajectory data includes the main features representing the original features of the original handwriting trajectory data. In this way, the recognition accuracy is ensured when the compressed handwriting trajectory data is input into the compressed handwriting recognition model for recognition.

According to some embodiments of the present disclosure, the original handwriting trajectory data is compressed by dimensionality reduction to obtain the compressed handwriting trajectory data, so that in the subsequent process of using the compressed handwriting recognition model for recognition, the number of unit dimensions of hidden layers in the compressed handwriting recognition model is greatly reduced through the feature selection. For example, the dimension is reduced from 512 to 256 or 128. By reducing the number of dimensions, the computational efficiency is significantly improved, thereby improving the real-time performance of the compressed handwriting recognition model.

After obtaining the compressed handwriting trajectory data, step S103 is performed.

Before performing step S103, the handwriting recognition model needs to be trained in advance, and then the model compression is performed on the trained handwriting recognition model, to obtain the compressed handwriting recognition model. In addition, after the handwriting recognition model has been trained, the compressed handwriting trajectory data is input into the compressed handwriting recognition model for recognition, to obtain the text recognition result. The handwriting recognition model is obtained through training with multiple pieces of handwriting trajectory training data in a training data set, and the compressed handwriting recognition model is obtained by performing the model compression on the handwriting recognition model.

According to some embodiments of the present disclosure, the handwriting recognition model is an end-to-end model, so that an input of the handwriting recognition model is the compressed handwriting trajectory data, and an output is the text recognition result, which can effectively overcome the defect in the related art that a plurality of modules are used for recognition.

Since the handwriting recognition model is obtained through training with multiple pieces of handwriting trajectory training data in a training data set, and the compressed handwriting trajectory data is obtained by compressing the original handwriting trajectory data by dimensionality reduction, it can be ensured that the compressed handwriting trajectory data maintains a high similarity with the handwriting trajectory data used for training, thereby effectively improving the recognition accuracy when the compressed handwriting trajectory data is input into the handwriting recognition model for recognition. In addition, since the correlation between the data of each dimension in the compressed handwriting trajectory data and the model recognition result is not lower than the preset threshold, the compressed handwriting trajectory data includes the main features representing the original features of the original handwriting trajectory data, which ensures the recognition accuracy when the compressed handwriting trajectory is input into the compressed handwriting recognition model for recognition.

According to some embodiments of the present disclosure, when training the handwriting recognition model, as shown in FIG. 2, the training of the handwriting recognition model includes the following steps:
S201. Obtain the training data set and a pre-selected model corresponding to the training data set.
S202. Obtain the multiple pieces of handwriting trajectory training data from the training data set.
S203. Train the pre-selected model with the multiple pieces of handwriting trajectory training data, to obtain the trained pre-selected training mode as the handwriting recognition model.

In step 201, handwriting trajectory data of a large number of users may be acquired, and all or a part of the acquired handwriting trajectory data is used as the training data set. In addition, a model is selected from at least one model whose recognition accuracy for the training data set is greater than a preset threshold as the pre-selected model. Typically, the model with the highest recognition accuracy is selected as the pre-selected model. Alternatively, the model with the second highest or the third highest recognition accuracy may be selected as the pre-selected model. For example, after obtaining the training data set, the recognition accuracies of existing models A1, A2, A3 and A4 for the training data set are 85%, 70%, 65% and 92% respectively. If the preset threshold is 75%, since 92%>85%>75%, a model is randomly selected from A1 and A4 as the pre-selected model. In order to shorten the time of a subsequent training process, A4 with the highest recognition accuracy may be selected as the pre-selected model.

According to some embodiments of the present disclosure, to obtain the training data set, a historical handwritten trajectory data set may be obtained. The historical handwriting trajectory data set includes one or more of horizontal handwriting trajectory data, vertical handwriting trajectory data, overlapping handwriting trajectory data, and rotating handwriting trajectory data. A part or all of data in the obtained historical handwriting trajectory data set may be used as the training data set.

According to some embodiments of the present disclosure, multiple types of data, for example, 5 or 6 types of data, may be generated by a program, to simulate real-world writing scenes, including horizontal writing, vertical writing, overlapping writing, rotating writing, and the like, so as to generate the horizontal handwriting trajectory data, the vertical handwriting trajectory data, the overlapping handwriting trajectory data, and the rotating handwriting trajectory data. The historical handwriting trajectory data is obtained according to the horizontal handwriting trajectory data, the vertical handwriting trajectory data, the overlapping handwriting trajectory data, and the rotating handwriting trajectory data.

According to some embodiments of the present disclosure, when the historical handwriting trajectory data set is obtained, data augmentation may be performed on the handwritten data in the historical handwriting trajectory data set, and the augmented historical handwriting trajectory data set is used as the training data set, so that the training data set has more and richer training data. Based on the more and richer training data, the training effect of the model can be enhanced, thereby improving the accuracy of the handwriting recognition model trained with the training data.

After obtaining the training data set, step S202 is performed.

In step S202, data preprocessing may be performed on each piece of training data in the training data set; and each piece of handwriting trajectory training data may be obtained according to each piece of the preprocessed training data. The data preprocessing includes at least one of re-sampling and trajectory rotation. In this case, the data preprocessing may include re-sampling or trajectory rotation, or include re-sampling and trajectory rotation, or include re-sampling, trajectory rotation, and trajectory cleaning, or the like.

According to some embodiments of the present disclosure, the data preprocessing includes re-sampling and trajectory rotation, so that the handwriting trajectory data obtained from each piece of preprocessed training data has higher precision.

According to some embodiments of the present disclosure, the specific implementation of step S202 may refer to the description of step S102, which is not detailed herein for the sake of simplicity.

After obtaining the handwriting trajectory data of each piece of training data, step S203 is performed.

In step S203, when training the pre-selected model with each piece of handwriting trajectory training data, a hard sample is first used and an easy sample is then used. In addition, the pre-selected model may be fine-tuned in the training process. Finally, a model satisfying a constraint condition is obtained as the trained pre-selected model, and the trained pre-selected model is used as the handwriting recognition model.

According to some embodiments of the present disclosure, first, a hard sample and an easy sample in each piece of handwriting trajectory training data are obtained. Then, the pre-selected model is trained in a mode of first using the hard sample and then using the easy sample. During the process of training the pre-selected model, the pre-selected model is fine-tuned, to obtain the trained pre-selected model, which is used as the handwriting recognition model.

According to some embodiments of the present disclosure, the pre-selected model may be a gated recurrent unit (GRU) neural network, a long short-term memory (LSTM) network, an attention network, an encoder-decoder network, or a quasi-recurrent neural network (QRNN).

According to some embodiments of the present disclosure, the fine-tuning the pre-selected model during the training process includes fine-tuning the network in the pre-selected model to be a combination of a network that extracts a Bessel feature and a QRNN network, or a combination of a network that extracts a Bessel feature and a GRU network. The recognition speed of the QRNN structure is faster. Other examples include a combination of a network that extracts a differential feature and a BLSTM network, or a combination of the original trajectory, a one-dimensional convolution layer and a BLSTM network, where the latter has an additional layer to extract features, thereby having a better effect but a higher time cost.

Alternatively, the fine-tuning the pre-selected model during the training process may include fine-tuning the network in the pre-selected model to be a combination of a GRU/LSTM network and a fully connected (FC) layer, or a combination of an attention network and an encoder-decoder network, which is not specifically limited herein.

In this way, when fine-tuning the pre-selected model in the training process, another network may be used to replace the network in the pre-selected model, so as to obtain a better network more quickly. This shortens the fine-tuning time, thereby improving the training efficiency. Further, the model that meets the constraint condition can be trained more quickly as the trained pre-selected model, and the trained pre-selected model is used as the handwriting recognition model.

According to some embodiments of the present disclosure, the constraint condition may include at least one of conditions that the recognition accuracy is greater than a preset accuracy, the precision is greater than a preset precision, a recall rate is greater than a preset recall rate, and a loss function solution.

The data augmentation is performed on the handwritten data in the historical handwriting trajectory data set to obtain the training data set, which makes the training data set have more and richer training data. In addition, when training the pre-selected model, the mode of first using the hard sample and then using the easy sample is adopted, and the fine-tuning is performed during the training process. Since the mode of first using the hard sample and then using the easy sample is adopted, on the basis of improving the accuracy of the model to recognize hard samples, the accuracy of the model to recognize easy samples is improved through the subsequent fine-tuning, thereby improving the recognition accuracy of the finally obtained end-to-end model. That is, the recognition accuracy for hard samples is improved while ensuring the recognition accuracy for easy samples.

In this way, in step S103, after obtaining the compressed handwriting trajectory data in real-time, the compressed handwriting trajectory data is input into the end-to-end handwriting recognition model obtained through training in step S201 to step S203, to obtain a recognized text as the text recognition result. The end-to-end handwriting recognition model obtained through training in step S201 to step S203 improves the recognition accuracy for hard samples while ensuring the recognition accuracy for easy samples, thereby improving the accuracy of the text recognition result obtained from the compressed handwriting trajectory data.

According to some embodiments of the present disclosure, after obtaining the trained pre-selected model through training in step S201 to step S203, model compression is performed on the trained pre-selected model, to obtain the compressed pre-selected model, and the compressed pre-selected model is used as the compressed handwriting recognition model. In this way, when performing step S103, the compressed handwriting trajectory data is input into the compressed pre-selected model for recognition, to obtain the text recognition result.

Since the compressed handwriting trajectory data is obtained by compressing the original handwriting trajectory data by dimensionality reduction, in the subsequent process of using the compressed handwriting recognition model for recognition, the number of unit dimensions of hidden layers in the compressed handwriting recognition model is greatly reduced through the feature selection. For example, the dimension is reduced from 512 to 256 or 128. By reducing the number of dimensions, the computational efficiency is significantly improved, thereby improving the real-time performance of the compressed handwriting recognition model.

According to some embodiments of the present disclosure, the model compression includes quantization (linear quantization and nonlinear quantization), distillation, pruning (structured and unstructured), network architecture search (NAS) and matrix decomposition. In this way, the model compression may be performed on the trained pre-selected model, so that the compressed pre-selected model is made smaller, and accordingly the end-to-end model is made smaller, which reduces the calculation amount and saves storage space, thereby meeting a requirement for deployment to a mobile terminal.

According to some embodiments of the present disclosure, the model compression is preferably model distillation. In this case, the model distillation may be performed on the trained pre-selected model, to obtain the distilled pre-selected model. The distilled pre-selected model is used as the compressed handwriting recognition model. Then, the compressed handwriting trajectory data is input into the compressed handwriting recognition model for recognition, to obtain the text recognition result.

According to some embodiments of the present disclosure, the model distillation may include feature-based distillation, logits-based distillation, relationship-based distillation, and the like. After the distillation, the size of model parameters may be decreased from 8 M to 3 M, while the accuracy is not reduced. In this way, the end-to-end model is made smaller, without reduction in the recognition accuracy. After the model distillation is performed, non-linear quantization processing may be performed. If the model with the parameter size of 3M is stored in a mobile terminal, and each parameter is stored in the float type, the model size is 3M×4 byte=12 Mbyte, which generally exceeds the conventional storage of the mobile terminal. After the non-linear quantization processing, the model parameters may be stored in the int8 type, that is, the final storage size is 3 M×1 byte=3 Mbyte, which can meet the requirement for deployment to the mobile terminal. In this way, the small distilled model with low complexity but basically unchanged accuracy is used as the compressed handwriting recognition model.

For example, the trained pre-selected model is a complex model, specifically a four-layer bidirectional LSTM+2FC+CTC LOSS. The complex model is distilled by logits-based distillation, to obtain a small model of a two-layer unidirectional LSTM+1FC+CTC LOSS. In this way, the size of parameters is decreased by more than one half, and accordingly the calculation amount is reduced. This allows model prediction for each stroke, thereby realizing real-time streaming output.

In this way, since the compressed handwriting trajectory data is obtained by compressing the original handwriting trajectory data by dimensionality reduction, in the subsequent process of using the compressed handwriting recognition model for recognition, the number of unit dimensions of hidden layers in the compressed handwriting recognition model is greatly reduced through the feature selection, and thus the size of model parameters in the compressed handwriting recognition model is decreased. Since the number of unit dimensions of the hidden layers is greatly reduced and the size of model parameters is decreased, the computational efficiency of the compressed handwriting recognition model is improved, thereby ensuring the real-time performance of the recognition.

Based on the foregoing technical solutions, after obtaining the original handwriting trajectory data in real-time, the original handwriting trajectory data is compressed. The obtained compressed handwriting trajectory data is used as the input, and the handwriting sequence features of the compressed handwriting trajectory data are recognized by the compressed end-to-end model, to obtain the text recognition result. By the segmentation, combination and recognition in the related art, when recognizing continuous stroke inputs, such as cursive handwriting, running handwriting, and the like, since there is no break in the continuous stroke handwriting, the segmentation module has a high probability of incorrect segmentation, resulting in low recognition accuracy. By contrast, the use of the compressed handwriting recognition model avoids the segmentation module making incorrect segmentation. The compressed handwriting trajectory data obtained by compressing the original handwriting trajectory data is used as the input, to use the handwriting sequence features for recognition, which effectively avoids the problem in the related art that the recognition accuracy is low due to incorrect segmentation, thereby effectively improving the recognition accuracy.

Moreover, since the compressed handwriting trajectory data is obtained by compressing the original handwriting trajectory data by dimensionality reduction, in the subsequent process of using the compressed handwriting recognition model for recognition, the number of unit dimensions of hidden layers in the compressed handwriting recognition model is greatly reduced through the feature selection, and thus the size of model parameters in the compressed handwriting recognition model is decreased. Since the number of unit dimensions of the hidden layers is greatly reduced and the size of model parameters is decreased, the computational efficiency of the compressed handwriting recognition model is improved, thereby ensuring the real-time performance of the recognition.

### Apparatus Embodiments

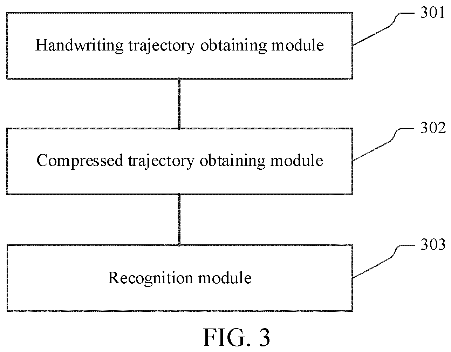

FIG. 3 shows a schematic structural diagram of a handwriting recognition apparatus according to one or more embodiments of the present disclosure. The apparatus may include:
a handwriting trajectory obtaining module 301, configured to obtain original handwriting trajectory data in real-time;
a compressed trajectory obtaining module 302, configured to compress the original handwriting trajectory data, to obtain compressed handwriting trajectory data; and
a recognition module 303, configured to input the compressed handwriting trajectory data into a compressed handwriting recognition model for recognition, to obtain a text recognition result corresponding to the original handwriting trajectory data, a handwriting recognition model being obtained through training with multiple pieces of handwriting trajectory training data in a training data set, and the compressed handwriting recognition model being obtained by performing model compression on the handwriting recognition model.

In some embodiments, the handwriting trajectory obtaining module 301 is configured to perform data preprocessing on data inputted by handwriting and is obtained in real-time, the data preprocessing including re-sampling; and obtain the original handwriting trajectory data in real-time according to the preprocessed data inputted by handwriting.

In some embodiments, the compressed trajectory obtaining module 302 is configured to compress the original handwriting trajectory data by dimensionality reduction, to obtain the compressed handwriting trajectory data, a correlation between data of each dimension in the compressed handwriting trajectory data and a model recognition result of the handwriting recognition model being not lower than a preset threshold.

In some embodiments, the handwriting recognition model is an end-to-end model.

In some embodiments, the apparatus further includes:
a model training module, configured to obtain the training data set and a pre-selected model corresponding to the training data set; obtain the multiple pieces of handwriting trajectory training data from the training data set; and train the pre-selected model with the handwriting trajectory data of each piece of training data, to obtain the trained pre-selected model as the handwriting recognition model.

In some embodiments, the model training module includes:
a training data set obtaining unit, configured to obtain a historical handwriting trajectory data set, the historical handwriting trajectory data set including one or more of horizontal handwriting trajectory data, vertical handwriting trajectory data, overlapping handwriting trajectory data, and rotating handwriting trajectory data; and perform data augmentation on data in the historical handwriting trajectory data set, to obtain the training data set.

In some embodiments, the model training module includes:
a model training unit, configured to obtain a hard sample and an easy sample in each piece of handwriting trajectory training data; train the pre-selected model in a mode of first using the hard sample and then using the easy sample; and fine-tune the pre-selected model during a process of training the pre-selected model, to obtain the handwriting recognition model.

In some embodiments, the apparatus further includes:
a compressed model obtaining module, configured to, after training the pre-selected model, to obtain the trained pre-selected model as the handwriting recognition model, perform model distillation on the trained pre-selected model, to obtain the distilled pre-selected model as the compressed handwriting recognition model.

The apparatus embodiments are similar to the method embodiments, and therefore are described briefly. The relevant parts may refer to the description in the method embodiments.

The embodiments in the present disclosure are described in a progressive manner. Description of each embodiment focuses on differences from other embodiments, and reference may be made to each other for the same or similar parts among respective embodiments.

The specific implementations of performing operations by the various modules of the apparatus in the foregoing embodiments are described in detail in the embodiments related to the method, and are not further detailed herein.

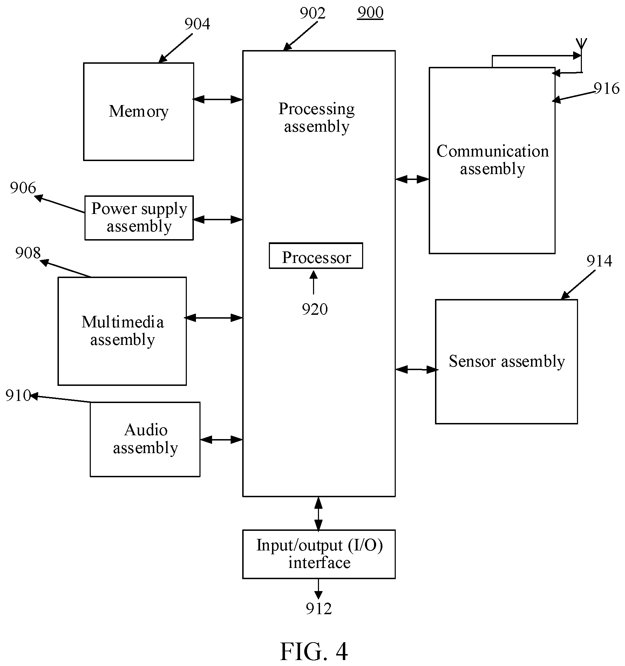

FIG. 4 is a structural diagram of a handwriting recognition device according to one or more embodiments of the present disclosure. For example, the device 900 may be a mobile phone, a computer, a digital broadcasting terminal, a messaging device, a game console, a tablet device, a medical device, a fitness facility, a personal digital assistant, or the like.

Referring to FIG. 4, the device 900 may include one or more of the following assemblies: a processing assembly 902, a memory 904, a power supply assembly 906, a multimedia assembly 908, an audio assembly 910, an input/output (I/O) interface 912, a sensor assembly 914, and a communication assembly 916.

The processing assembly 902 usually controls the whole operation of the device 900, such as operations associated with displaying, a phone call, data communication, a camera operation, and a recording operation. The processing assembly 902 may include one or more processors 920 to execute instructions, to complete all or some steps of the foregoing method. In addition, the processing assembly 902 may include one or more modules, to facilitate the interaction between the processing assembly 902 and other assemblies. For example, the processing assembly 902 may include a multimedia module, to facilitate the interaction between the multimedia assembly 908 and the processing assembly 902.

The memory 904 is configured to store various types of data to support operations on the device 900. Examples of the data include instructions, contact data, phonebook data, messages, pictures, videos, and the like of any application or method operated on the device 900. The memory 904 may be implemented by any type of volatile or non-volatile storage devices or a combination thereof, such as a static random access memory (SRAM), an electrically erasable programmable read-only memory (EPROM), a programmable read-only memory (PROM), a read-only memory (ROM), a magnetic memory, a flash memory, a magnetic disc, or an optical disc.

The power supply assembly 906 provides power to the assemblies of the device 900. The power supply assembly 906 may include a power supply management system, one or more power supplies, and other assemblies associated with generating, managing and allocating power for the device 900.

The multimedia assembly 908 includes a screen providing an output interface between the device 900 and a user. In some embodiments, the touch display screen may include a LCD and a touch panel (TP). If the screen includes a TP, the screen may be implemented as a touchscreen, to receive an input signal from the user. The TP includes one or more touch sensors to sense touching, sliding, and gestures on the TP. The touch sensor may not only sense the boundary of touching or sliding operations, but also detect duration and pressure related to the touching or sliding operations. In some embodiments, the multimedia assembly 908 includes a front camera and/or a rear camera. When the device 900 is in an operation mode, such as a shoot mode or a video mode, the front camera and/or the rear camera may receive external multimedia data. Each front camera and rear camera may be a fixed optical lens system or have a focal length and an optical zooming capability.

The audio assembly 910 is configured to output and/or input an audio signal. For example, the audio assembly 910 includes a microphone (MIC), and when the device 900 is in an operation mode, such as a call mode, a recording mode, and a voice identification mode, the MIC is configured to receive an external audio signal. The received audio signal may be further stored in the memory 904 or sent through the communication assembly 916. In some embodiments, the audio assembly 910 further includes a loudspeaker, configured to output an audio signal.

The I/O interface 912 provides an interface between the processing assembly 902 and an external interface module. The external interface module may be a keyboard, a click wheel, buttons, or the like. The buttons may include, but not limited to: a homepage button, a volume button, a start-up button, and a locking button.

The sensor assembly 914 includes one or more sensors, configured to provide status evaluation in each aspect to the device 900. For example, the sensor assembly 914 may detect an opened/closed status of the device 900, and relative positioning of the assembly. For example, the assembly is a display and a small keyboard of the device 900. The sensor assembly 914 may further detect the position change of the device 900 or one assembly of the device 900, the existence or nonexistence of contact between the user and the device 900, the azimuth or acceleration/deceleration of the device 900, and the temperature change of the device 900. The sensor assembly 914 may include a proximity sensor, configured to detect the existence of nearby objects without any physical contact. The sensor assembly 914 may further include an optical sensor, such as a complementary metal oxide semiconductor (CMOS) image sensor or a charge-coupled device (CCD) image sensor, that is used in an imaging application. In some embodiments, the sensor assembly 914 may further include an acceleration sensor, a gyroscope sensor, a magnetic sensor, a pressure sensor, or a temperature sensor.

The communication assembly 916 is configured to facilitate communication in a wired or wireless manner between the device 900 and other devices. The device 900 may access a wireless network based on communication standards, such as Wi-Fi, 2G, or 3G, or a combination thereof. In an exemplary embodiment, the communication assembly 916 receives a broadcast signal or broadcast related information from an external broadcast management system via a broadcast channel. In an exemplary embodiment, the communication assembly 916 further includes a near field communication (NFC) module, to promote short range communication. For example, the NFC module may be implemented based on a radio frequency identification (RFID) technology, an infra-red data association (IrDA) technology, an ultra wideband (UWB) technology, a Bluetooth (BT) technology, and other technologies.

In some embodiments, the device 900 may be implemented as one or more application specific integrated circuit (ASIC), a digital signal processor (DSP), a digital signal processing device (DSPD), a programmable logic device (PLD), a field programmable gate array (FPGA), a controller, a micro-controller, a microprocessor or other electronic element, so as to perform the foregoing method.

In some embodiments, a non-transitory computer readable storage medium including instructions, such as a memory 904 including instructions, is further provided, and the foregoing instructions may be executed by a processor 920 of the device 900 to complete the foregoing method. For example, the non-transitory computer readable storage medium may be a ROM, a RAM, a CD-ROM, a magnetic tape, a floppy disk, an optical data storage device, or the like.

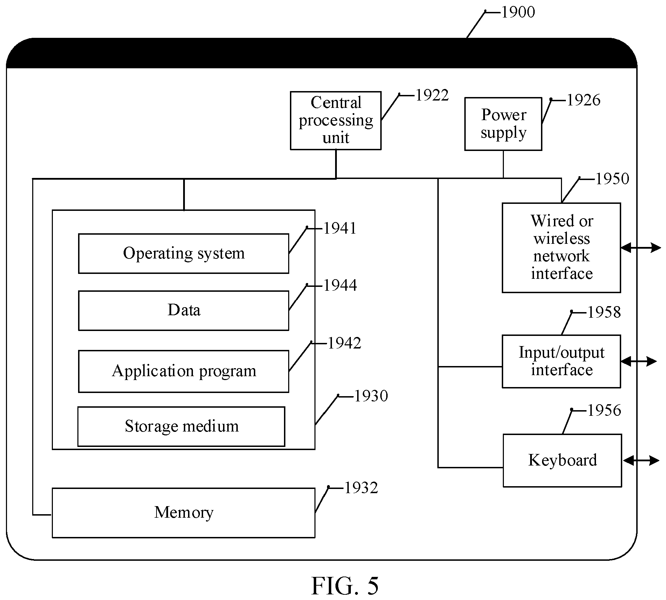

FIG. 5 is a structural diagram of a server according to some embodiments of the present disclosure. The server 1900 may greatly differ as configuration or performance differs, may include one or more central processing units (CPUs) 1922 (for example, one or more processors), a memory 1932, and one or more storage mediums 1930 storing an application program 1942 or data 1944 (for example, one or more mass storage devices). The memories 1932 and the storage mediums 1930 may be used for transient storage or permanent storage. A program stored in the storage medium 1930 may include one or more modules (which are not marked in the figure), and each module may include a series of instruction operations on the server. Further, the central processing units 1922 may be configured to communicate with the storage media 1930, and perform on the server 1900 a series of instruction operations stored in the storage media 1930.

The server 1900 may further include one or more power supplies 1926, one or more wired or wireless network interfaces 1950, one or more input/output interfaces 1958, one or more keyboards 1956, and/or, one or more operating systems 1941, for example, Windows ServerTM, Mac OS XTM, UnixTM, LinuxTM, and FreeBSDTM.

A non-transitory computer-readable storage medium, when the instructions in the storage medium are executed by a processor of an apparatus (device or server), causes the apparatus to execute a handwriting recognition method, including: obtaining original handwriting trajectory data in real-time; compressing the original handwriting trajectory data, to obtain compressed handwriting trajectory data; and inputting the compressed handwriting trajectory data into a compressed handwriting recognition model for recognition, to obtain a text recognition result corresponding to the original handwriting trajectory data. A handwriting recognition model is obtained through training with multiple pieces of handwriting trajectory training data in a training data set, and the compressed handwriting recognition model is obtained by performing model compression on the handwriting recognition model.

The present disclosure is described with reference to the flowchart and/or block diagram of the method, device (system), and computer program product of the embodiments of the present disclosure. The computer program instructions may implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the general-purpose computer or the processor of another programmable data processing device.

These computer program instructions may also be stored in a computer readable memory that can guide a computer or another programmable data processing device to work in a specific manner, so that the instructions stored in the computer readable memory generate a product including an instruction apparatus, where the instruction apparatus implements functions specified in one or more procedures in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more procedures in the flowcharts and/or one or more blocks in the block diagrams.

Although the exemplary embodiments of the present invention have been described, persons skilled in the art may make alterations and modifications to these embodiments once they learn the basic inventive concept. Therefore, the appended claims are intended to be construed as including the exemplary embodiments and all alterations and modifications falling within the scope of the present disclosure.

Apparently, persons skilled in the art may make various modifications and variations to the present disclosure without departing from the scope of the appended claims. If these modifications and variations of the present disclosure belong to the scope of the claims of the present disclosure and equivalent technologies thereof, the present disclosure is also intended to cover these modifications and variations.

## Claims

1. A handwriting recognition method, comprising:
obtaining (S101), from data inputted by handwriting by a user on a display screen of an electronic device, original handwriting trajectory data in real-time;
compressing (S102) the original handwriting trajectory data to obtain compressed handwriting trajectory data, comprising extracting, by using principal component analysis, features that represent the original handwriting trajectory data, wherein a correlation between retained data of each dimension of the original handwriting data and a model recognition result is not lower than a preset threshold, the compressed handwriting trajectory data is obtained according to the retained data of each dimension, wherein K features of the original handwriting trajectory data, having highest correlations with the model recognition result, are retained and the preset threshold is configured according to a feature having a lowest correlation with the model recognition result among the K features, K being an integer not less than 2; and
inputting (S103) the compressed handwriting trajectory data into a compressed handwriting recognition model, to obtain a text recognition result, the compressed handwriting recognition model being obtained by performing model compression on an initial handwriting recognition model, the initial handwriting recognition model being obtained through training with multiple pieces of handwriting trajectory training data in a training data set, wherein the model compression comprises quantization, distillation, pruning, network architecture search or matrix decomposition.

2. The method according to claim 1, wherein the obtaining (S101) original handwriting trajectory data in real-time comprises:
performing data preprocessing on data inputted by handwriting and obtained in real-time, the data preprocessing comprising re-sampling; and
obtaining the original handwriting trajectory data in real-time according to the preprocessed data.

3. The method according to claim 1, wherein the handwriting recognition model is an end-to-end model.

4. The method according to claim 3, wherein the training of the handwriting recognition model comprises:
obtaining (S201) the training data set and a pre-selected model corresponding to the training data set;
obtaining (S202) the multiple pieces of handwriting trajectory training data from the training data set; and
training (S203) the pre-selected model with the multiple pieces of handwriting trajectory training data, to obtain the trained pre-selected training model as the handwriting recognition model.

5. The method according to claim 4, wherein the obtaining (S201) the training data set comprises:
obtaining a historical handwriting trajectory data set, the historical handwriting trajectory data set comprising one or more of horizontal handwriting trajectory data, vertical handwriting trajectory data, overlapping handwriting trajectory data, and rotating handwriting trajectory data; and
performing data augmentation on data in the historical handwriting trajectory data set, to obtain the training data set.

6. The method according to claim 5, wherein the training (S203) the pre-selected model with multiple pieces of handwriting trajectory training data, to obtain the handwriting recognition model comprises:
obtaining a hard sample and an easy sample in each piece of handwriting trajectory training data;
training the pre-selected model in a mode of first using the hard sample and then using the easy sample; and
fine-tuning the pre-selected model during a process of training the pre-selected model, to obtain the trained pre-selected model as the handwriting recognition model.

7. The method according to any one of claims 4 to 6, wherein after training the pre-selected model, to obtain the handwriting recognition model, the method further comprises:
performing model distillation on the trained pre-selected model, to obtain the distilled pre-selected mode as the compressed handwriting recognition model.

8. A handwriting recognition device, comprising a memory (904) and one or more programs, the one or more programs being stored in the memory (904) and configured to be executed by one or more processors (920) to perform the method according to any one of claims 1 to 7.

9. A computer-readable medium, storing instructions, the instructions, when executed by one or more processors (920), causing an apparatus to perform the method according to any one of claims 1 to 7.

## Patentansprüche

1. Verfahren zur Handschrifterkennung, umfassend:
Erhalten (S101), aus durch Handschrift von einem Benutzer auf einem Anzeigebildschirm eines elektronischen Geräts eingegebenen Daten, von originalen Handschrift-Trajektoriendaten in Echtzeit;
Komprimieren (S102) der originalen Handschrift-Trajektoriendaten, um komprimierte Handschrift-Trajektoriendaten zu erhalten, umfassend das Extrahieren, mittels Hauptkomponentenanalyse, von Merkmalen, die die originalen Handschrift-Trajektoriendaten repräsentieren, wobei eine Korrelation zwischen den beibehaltenen Daten jeder Dimension der originalen Handschriftdaten und einem Modellerkennungsergebnis nicht niedriger als ein voreingestellter Schwellenwert ist, die komprimierten Handschrift-Trajektoriendaten gemäß den beibehaltenen Daten jeder Dimension erhalten werden, wobei K Merkmale der originalen Handschrift-Trajektoriendaten, die die höchsten Korrelationen mit dem Modellerkennungsergebnis aufweisen, beibehalten werden und der voreingestellte Schwellenwert gemäß einem Merkmal konfiguriert wird, das eine niedrigste Korrelation mit dem Modellerkennungsergebnis unter den K Merkmalen aufweist, wobei K eine ganze Zahl nicht kleiner als 2 ist; und
Eingeben (S103) der komprimierten Handschrift-Trajektoriendaten in ein komprimiertes Handschrifterkennungsmodell, um ein Texterkennungsergebnis zu erhalten, wobei das komprimierte Handschrifterkennungsmodell durch Durchführen einer Modellkompression an einem anfänglichen Handschrifterkennungsmodell erhalten wird, wobei das anfängliche Handschrifterkennungsmodell durch Training mit mehreren Handschrift-Trajektorien-Trainingsdatenelementen in einem Trainingsdatensatz erhalten wird, wobei die Modellkompression Quantisierung, Destillation, Pruning, Netzwerkarchitektursuche oder Matrixzerlegung umfasst.

2. Verfahren nach Anspruch 1, wobei das Erhalten (S101) von originalen Handschrift-Trajektoriendaten in Echtzeit umfasst:
Durchführen einer Datenvorverarbeitung an durch Handschrift eingegebenen und in Echtzeit erhaltenen Daten, wobei die Datenvorverarbeitung ein Resampling umfasst; und
Erhalten der originalen Handschrift-Trajektoriendaten in Echtzeit gemäß den vorverarbeiteten Daten.

3. Verfahren nach Anspruch 1, wobei das Handschrifterkennungsmodell ein End-to-End-Modell ist.

4. Verfahren nach Anspruch 3, wobei das Training des Handschrifterkennungsmodells umfasst:
Erhalten (S201) des Trainingsdatensatzes und eines vorausgewählten Modells, das dem Trainingsdatensatz entspricht;
Erhalten (S202) der mehreren Handschrift-Trajektorien-Trainingsdatenelemente aus dem Trainingsdatensatz; und
Trainieren (S203) des vorausgewählten Modells mit den mehreren Handschrift-Trajektorien-Trainingsdatenelementen, um das trainierte vorausgewählte Trainingsmodell als das Handschrifterkennungsmodell zu erhalten.

5. Verfahren nach Anspruch 4, wobei das Erhalten (S201) des Trainingsdatensatzes umfasst:
Erhalten eines historischen Handschrift-Trajektoriendatensatzes, wobei der historische Handschrift-Trajektoriendatensatz einen oder mehrere aus horizontalen Handschrift-Trajektoriendaten, vertikalen Handschrift-Trajektoriendaten, überlappenden Handschrift-Trajektoriendaten und rotierenden Handschrift-Trajektoriendaten umfasst; und
Durchführen einer Datenaugmentation an Daten im historischen Handschrift-Trajektoriendatensatz, um den Trainingsdatensatz zu erhalten.

6. Verfahren nach Anspruch 5, wobei das Trainieren (S203) des vorausgewählten Modells mit mehreren Handschrift-Trajektorien-Trainingsdatenelementen, um das Handschrifterkennungsmodell zu erhalten, umfasst:
Erhalten eines schwierigen Musters und eines einfachen Musters in jedem Handschrift-Trajektorien-Trainingsdatenelement;
Trainieren des vorausgewählten Modells in einem Modus des zunächst Verwendens des schwierigen Musters und dann des einfachen Musters; und
Feinabstimmung des vorausgewählten Modells während eines Prozesses des Trainierens des vorausgewählten Modells, um das trainierte vorausgewählte Modell als das Handschrifterkennungsmodell zu erhalten.

7. Verfahren nach einem der Ansprüche 4 bis 6, wobei nach dem Trainieren des vorausgewählten Modells, um das Handschrifterkennungsmodell zu erhalten, das Verfahren ferner umfasst:
Durchführen einer Modelldestillation an dem trainierten vorausgewählten Modell, um das destillierte vorausgewählte Modell als das komprimierte Handschrifterkennungsmodell zu erhalten.

8. Handschrifterkennungsvorrichtung, umfassend einen Speicher (904) und ein oder mehrere Programme, wobei das eine oder die mehreren Programme in dem Speicher (904) gespeichert und konfiguriert sind, um von einem oder mehreren Prozessoren (920) ausgeführt zu werden, um das Verfahren nach einem der Ansprüche 1 bis 7 durchzuführen.

9. Computerlesbares Medium, das Anweisungen speichert, wobei die Anweisungen, wenn sie von einem oder mehreren Prozessoren (920) ausgeführt werden, eine Vorrichtung veranlassen, das Verfahren nach einem der Ansprüche 1 bis 7 durchzuführen.

## Revendications

1. Procédé de reconnaissance d'écriture manuscrite, comprenant :
l'obtention (S101), à partir de données saisies par écriture manuscrite par un utilisateur sur un écran d'affichage d'un dispositif électronique, de données de trajectoire d'écriture manuscrite originales en temps réel ;
la compression (S102) des données de trajectoire d'écriture manuscrite originales pour obtenir des données de trajectoire d'écriture manuscrite compressées, comprenant l'extraction, au moyen d'une analyse en composantes principales, de caractéristiques qui représentent les données de trajectoire d'écriture manuscrite originales, dans laquelle une corrélation entre les données retenues de chaque dimension des données d'écriture manuscrite originales et un résultat de reconnaissance de modèle n'est pas inférieure à un seuil prédéfini, les données de trajectoire d'écriture manuscrite compressées étant obtenues en fonction des données retenues de chaque dimension, dans laquelle K caractéristiques des données de trajectoire d'écriture manuscrite originales, ayant les corrélations les plus élevées avec le résultat de reconnaissance de modèle, sont retenues et le seuil prédéfini est configuré en fonction d'une caractéristique ayant une corrélation la plus faible avec le résultat de reconnaissance de modèle parmi les K caractéristiques, K étant un nombre entier non inférieur à 2 ; et
l'entrée (S103) des données de trajectoire d'écriture manuscrite compressées dans un modèle de reconnaissance d'écriture manuscrite compressé, pour obtenir un résultat de reconnaissance de texte, le modèle de reconnaissance d'écriture manuscrite compressé étant obtenu en effectuant une compression de modèle sur un modèle de reconnaissance d'écriture manuscrite initial, le modèle de reconnaissance d'écriture manuscrite initial étant obtenu par entraînement avec de multiples éléments de données d'entraînement de trajectoire d'écriture manuscrite dans un jeu de données d'entraînement, dans laquelle la compression de modèle comprend la quantification, la distillation, l'élagage, la recherche d'architecture de réseau ou la décomposition matricielle.

2. Procédé selon la revendication 1, dans lequel l'obtention (S101) de données de trajectoire d'écriture manuscrite originales en temps réel comprend :
la réalisation d'un prétraitement de données sur des données saisies par écriture manuscrite et obtenues en temps réel, le prétraitement de données comprenant un rééchantillonnage ; et
l'obtention des données de trajectoire d'écriture manuscrite originales en temps réel en fonction des données prétraitées.

3. Procédé selon la revendication 1, dans lequel le modèle de reconnaissance d'écriture manuscrite est un modèle de bout en bout.

4. Procédé selon la revendication 3, dans lequel l'entraînement du modèle de reconnaissance d'écriture manuscrite comprend :
l'obtention (S201) du jeu de données d'entraînement et d'un modèle pré-sélectionné correspondant au jeu de données d'entraînement ;
l'obtention (S202) des multiples éléments de données d'entraînement de trajectoire d'écriture manuscrite à partir du jeu de données d'entraînement ; et
l'entraînement (S203) du modèle pré-sélectionné avec les multiples éléments de données d'entraînement de trajectoire d'écriture manuscrite, pour obtenir le modèle d'entraînement pré-sélectionné entraîné en tant que modèle de reconnaissance d'écriture manuscrite.

5. Procédé selon la revendication 4, dans lequel l'obtention (S201) du jeu de données d'entraînement comprend :
l'obtention d'un jeu de données de trajectoire d'écriture manuscrite historique, le jeu de données de trajectoire d'écriture manuscrite historique comprenant un ou plusieurs parmi des données de trajectoire d'écriture manuscrite horizontale, des données de trajectoire d'écriture manuscrite verticale, des données de trajectoire d'écriture manuscrite superposée et des données de trajectoire d'écriture manuscrite rotative ; et
la réalisation d'une augmentation de données sur des données dans le jeu de données de trajectoire d'écriture manuscrite historique, pour obtenir le jeu de données d'entraînement.

6. Procédé selon la revendication 5, dans lequel l'entraînement (S203) du modèle pré-sélectionné avec de multiples éléments de données d'entraînement de trajectoire d'écriture manuscrite, pour obtenir le modèle de reconnaissance d'écriture manuscrite, comprend :
l'obtention d'un échantillon difficile et d'un échantillon facile dans chaque élément de données d'entraînement de trajectoire d'écriture manuscrite ;
l'entraînement du modèle pré-sélectionné selon un mode consistant à utiliser d'abord l'échantillon difficile puis l'échantillon facile ; et
le réglage fin du modèle pré-sélectionné pendant un processus d'entraînement du modèle pré-sélectionné, pour obtenir le modèle pré-sélectionné entraîné en tant que modèle de reconnaissance d'écriture manuscrite.

7. Procédé selon l'une quelconque des revendications 4 à 6, dans lequel après l'entraînement du modèle pré-sélectionné, pour obtenir le modèle de reconnaissance d'écriture manuscrite, le procédé comprend en outre :
la réalisation d'une distillation de modèle sur le modèle pré-sélectionné entraîné, pour obtenir le modèle pré-sélectionné distillé en tant que modèle de reconnaissance d'écriture manuscrite compressé.

8. Dispositif de reconnaissance d'écriture manuscrite, comprenant une mémoire (904) et un ou plusieurs programmes, le ou les programmes étant stockés dans la mémoire (904) et configurés pour être exécutés par un ou plusieurs processeurs (920) pour mettre en œuvre le procédé selon l'une quelconque des revendications 1 à 7.

9. Support lisible par ordinateur, stockant des instructions, les instructions, lorsqu'elles sont exécutées par un ou plusieurs processeurs (920), amenant un appareil à mettre en œuvre le procédé selon l'une quelconque des revendications 1 à 7.
